# EUROPEAN PATENT SPECIFICATION

(11) **EP 0 525 566 B1**
(45) Date of publication and mention of the grant of the patent: **18.10.1995**
(21) Application number: 92112347.7
(22) Date of filing: 20.07.1992
(51) Int. Cl.: F01N 7/00, F01N 3/02, G01N 27/04

(54) **A method and apparatus for determining the clogging of a filter, in particular a filter for an exhaust system**
Verfahren und Vorrichtung zur Feststellung der Verstopfung eines Filters, insbesondere eines Filters für ein Auspuffsystem
Méthode et appareil pour la détermination du colmatage d'un filtre, particulièrement un filtre d'un système d'échappement

(30) Priority: 30.07.1991 IT TO910602
(43) Date of publication of application: 03.02.1993
(73) Proprietor: IVECO FIAT S.p.A., 10156 Torino (IT)
(72) Inventor: Cuzzucoli, Giuseppe, I-10044 Pianezza (IT); Genovese, Fabio, I-10093 Collegno (IT)
(74) Representative: Cerbaro, Elena

(56) References cited:
- EP-A- 0 237 824
- DE-A- 3 717 141
- US-A- 4 445 326
- US-A- 4 450 682
- US-A- 4 656 832

## Description

The present invention relates to a method and apparatus for determining the clogging of a filter, in particular a filter for the exhaust system of a diesel engine according to the preamble of claim 1.

Some exhaust systems of diesel engines are provided with ceramic filters disposed along the exhaust pipe between the engine manifold and the silencer, with a view to eliminating the particulate emissions contained in the exhaust gases. These filters are of cell-like structure and absorb the carbon particles forming the particulate emissions, which are deposited on the walls and on the active elements of the filter itself.

The efficiency of the filter decreases as the thickness of these carbon deposits increases, which also obstruct the passage of the exhaust gases, thereby clogging the filter and reducing the efficiency of the engine.

Devices for determining the extent of clogging of the filter are known, comprising pressure sensors adapted to detect the difference between the pressure measured upstream of the filter and the pressure measured downstream thereof. This pressure difference is proportional to the clogging of the filter and is compared with a threshold limit so as to actuate, when said value is exceeded, a system for signalling clogging of the filter.

However, the known devices are disadvantageous, since they comprise a high number of components, they are of great complexity and are not sufficiently reliable.

A method for determining the clogging of a filter according to the preamble of claim 1 is disclosed in US-A-4.656.832.

It is the object of the invention to devise a method and apparatus for determining the clogging of a filter, in particular a filter for the exhaust system of a diesel engine, which obviates the disadvantages of the known solutions.

This object is achieved by a method for determining the clogging of a filter as defined in claim 1.

The invention will now be illustrated, referring in particular to the accompanying drawings, in which:
Figure 1 illustrates schematically the apparatus for monitoring the clogging of a filter installed in an exhaust pipe of an engine;
Figure 2 illustrates a logic block diagram of the operation of the apparatus of Figure 1;
Figure 3 illustrates a variant of the apparatus in Figure 1, and
Figure 4 illustrates a logic block diagram of the operation of the apparatus of Figure 3.

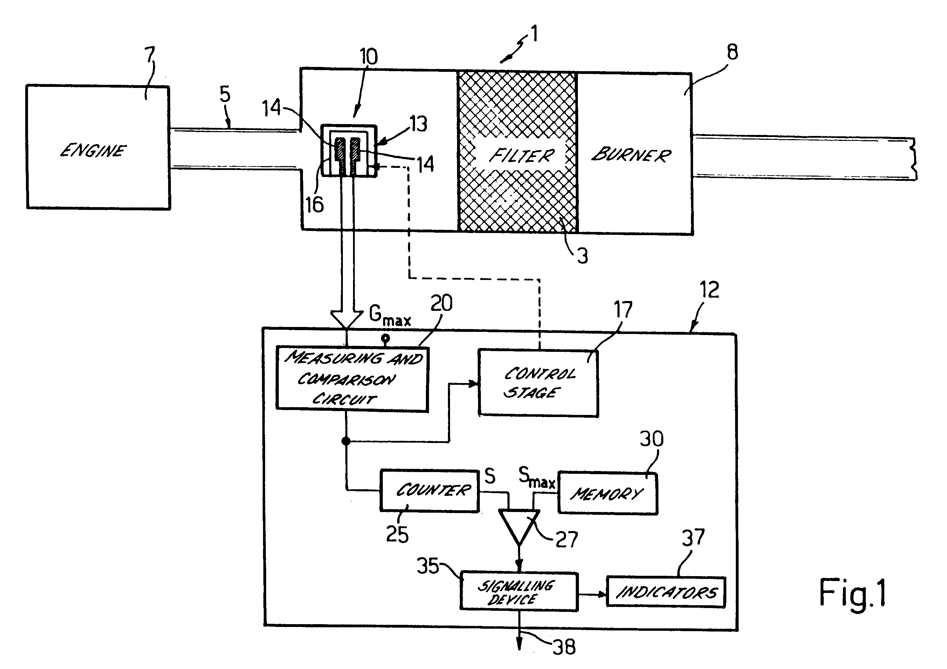

In Figure 1 the reference numeral 1 generally denotes an apparatus for determining the clogging of a filter 3 (in particular a ceramic filter) disposed along an exhaust pipe 5 of an engine 7, in particular a diesel engine. The filter 3 is associated with a burner 8 which is controlled by means (not shown) for eliminating the particulate matter deposited on the filter itself.

The apparatus 1 comprises a sensor 10 mounted in the pipe 5 between the engine 7 and the filter 3, and an electronic processor 12 which processes the information supplied by the sensor 10 so as to evaluate, in a manner which will be explained below, the condition of the filter 3.

The sensor 10 has been comprehensively described in the Patent Application No. 67992/A90 filed on the 11.12.1990 in the name of FIAT AUTO S.p.A., and comprises a plate 13 supporting a pair of electrodes 14 which are spaced apart and which are adapted to be exposed to the gas so as to allow the particulate matter contained in the gas to be deposited between the electrodes and the formation of a conductive path between the electrodes 14 themselves. The sensor 10 additionally comprises a heating element 16 disposed in the proximity of the electrodes 14 for periodically burning the particulate matter when the conductance of the conductive path between the electrode exceeds a predetermined value.

The electronic processor 12 comprises a measuring and comparison circuit 20 which is connected to the sensor 10 and measures the conductance (G) between the electrodes 14 of the sensor 10, comparing it with a threshold value (Gₘₐₓ).

The circuit 20 makes it possible to activate a control stage 17 for the heating element 16 of the sensor 10, when the value of the conductance (G) measured exceeds the threshold value (Gₘₐₓ); additionally, each time said regeneration operation takes place, the circuit 20 ensures that the number (S) stored by a counter 25 co-operating with the circuit 20 itself is incremented by one unit.

The counter 25 is connected to a circuit 27 which compares the number stored by the counter 25 with a limit value (Sₘₐₓ) stored in a permanent memory 30. The circuit 25 is also interconnected to a signalling circuit 35, which is connected to at least one visual or audible indicator 37, and is energised by the circuit 27 when the number (S) stored by the counter 25 is equal to the limit value (Sₘₐₓ) stored in the memory. The signalling circuit also has an output 38 through which it supplies a request signal for regeneration of the filter 3 and said signal is then fed to circuits (not shown) which energise the burner 8 for regeneration of the filter.

In operation, the sensor 10, as already stated in the foregoing, is exposed to the exhaust gases generated by the engine 7 and the carbon particles (which are electrically conductive) are deposited on the plate 13 electrically connecting the electrodes 14.

Therefore, a conductive path is formed between the electrodes 14, the conductance of which is dependent on the particle content in the smoke and increases with time as the thickness of the deposit increases. When the conductance value exceeds the threshold value, the circuit 20 energises the control stage 17 for the heating element 16, thereby regenerating the sensor 10.

The number (S) of the regenerations of the sensor 10 is directly proportional to the amount of particles flowing in the pipe 5 and, therefore, to the contamination of the ceramic filter 3, since after the exhaust gases have acted on the sensor 10 they penetrate the ceramic filter 3.

Therefore, a maximum number of regenerations of the sensor 10 is established experimentally, by way of which it is ascertained that the filter 3 is clogged and requires regeneration.

In this way, when the number of regenerations of the sensor 10 stored in the counter is equal to the maximum number of regenerations, the signalling circuit 35 indicates, by means of the indicators 37, the poor condition of the ceramic filter 3 and requests the regeneration of said filter.

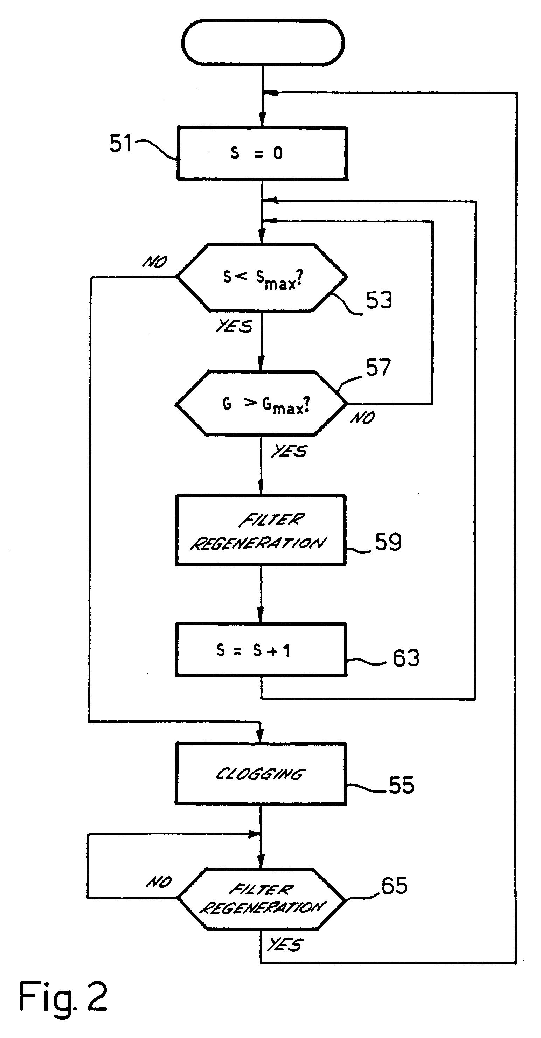

For greater clarity, Figure 2 illustrates a logic block diagram of the operation of the processor 12, carrying out the present diagnostic method.

Initially a block 51 is reached, in which the value (S) of the counter 25 is set to zero, corresponding to the operation S = 0. The block 51 is followed by a block 53, in which it is verified whether the value (S) of the counter 25 is strictly less than the limit value (Sₘₐₓ); if this condition is not verified, the operation passes from the block 53 to a block 55, otherwise a block 57 follows, in which it is verified whether the value (G) of the conductance measured is higher than a limit value (Gₘₐₓ). If this condition is not verified the operation returns from the block 57 to the block 53, otherwise a block 59 follows which controls the regeneration of the sensor 10. The block 59 is followed by a block 63, in which the value in the memory of the counter 25 is increased by one unit, corresponding to the operation S = S + 1; finally, from the block 63 the operation returns to the block 53.

The block 55 ensures the actuation of the visual and/or audible warning of clogging of the filter 3 and controls the regeneration of the filter itself, and it is followed by a block 65, in which the end of filter regeneration is awaited; in the interim, a by-pass duct (not shown) is used for the exhaust from the engine; after the regeneration, the pipe 5 with the filter 3 is reconnected and the operation returns from the block 65 to the block 51.

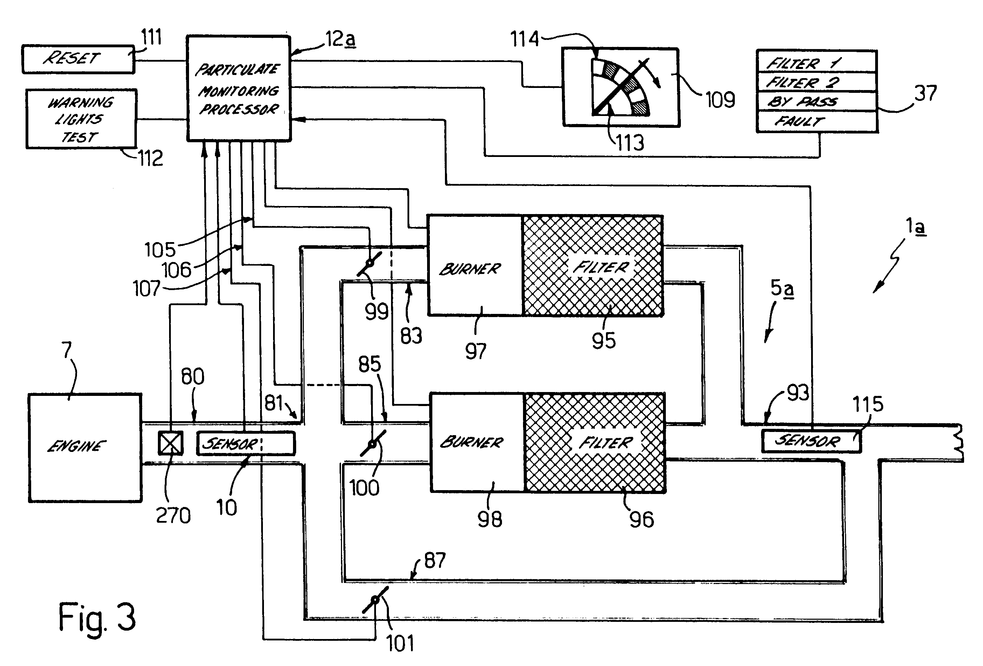

Figure 3 illustrates a variant of the apparatus according to the invention, designated 1a,for determining the clogging of filters disposed in a pipe 5a by way of a processor 12a.

In particular, the pipe 5a comprises a first duct 80 which extends from the engine 7 to a branch point 81 at which the duct 80 is divided into three separate ducts, respectively designated 83, 85 and 87. Respective ceramic filters 95 and 96 are provided along the ducts 83 and 85, downstream of which filters the ducts 83 and 85 join together again to form a duct 93 into which the duct 87 also flows, which is a by-pass duct. Moreover, the filters 95 and 95 are provided with diesel-fuel burners 97 and 98 controlled by the processor 12a, for the elimination of the particulate matter deposited in the filters themselves. Each burner is actuated automatically when the respective filter is cut out of the exhaust circuit for the immediate regeneration of the filter itself.

Solenoid valves 99, 100 and 101 are provided along the ducts 83, 85 (upstream of the filters 95 and 96) and along the duct 87, which interrupt the flow of gas along the ducts and are controlled electrically by the processor 12a via control lines, respectively designated by the reference numerals 105, 106 and 107. The solenoid valves 99, 100 and 101 are controlled in such a way that when one is open, the others are necessarily closed.

The processor 12a is connected to the sensor 10 disposed in the duct 80 and to a second sensor 115 accommodated in the section 93.

The processor 12a is connected to peripheral devices (suitably accommodated in a dashboard (not shown) of a vehicle), comprising an analog clogging indicator 109, indicators 37, a system RESET button 111 and a button 112 for testing the warning lights 37.

The mode of operation of the sensors 10 and 115 is identical to that described with reference to Figure 1; in fact, they can be periodically regenerated, as described above. In particular, the sensor 10 effects an indirect evaluation of the degree of contamination of the filter 95 or 96 operative at that moment, in view of the fact that the number (S) of regenerations of the sensor 10 is correlated to the number of particles flowing in the duct 80.

During this measurement cycle, the gradual contamination of the filter is displayed on a gauge 109 provided with a pointer 113 which moves on a graduated scale 114 each time the sensor 10 is regenerated, thereby providing a visual indication of the state of clogging of the particular filter operative at that moment.

During this measurement phase, the solenoid valve 101 is always closed and only one of the two solenoid valves 99 and 100 is open (for example, the solenoid valve 99), corresponding to the filter of which the state of clogging is being determined (for example, the filter 95).

When the number of cycles (S) for regeneration of the sensor 10 equals the predetermined limit number (Sₘₐₓ), the processor 12a provides, via the indicators 37, a signal in respect of a clogged filter; additionally, the processor 12a effects the switching over of the solenoid valves 99 and 100 so as to cut out the clogged filter (for example, 95) and to convey the exhaust gases into the other filter (for example, the filter 96). Additionally, the processor 12a controls the regeneration,by oxidation,of the filter which has just been cut out (in the example in question, the filter 95).

The above-described measuring operations are repeated for the filter 96 until the processor 12a detects that this filter too is clogged. At this point, the processor 12a closes the solenoid valve 100, reopens the solenoid valve 99 (reconnecting the filter 95) and controls the regeneration of the filter 96.

The sensor 115, however, has an auxiliary function to verify the correct operation of the sensor 10 and of the filters 95, 96.

In fact, the predetermined limit number (Kₘₐₓ) for regeneration of the sensor 115 is chosen so that, under correct operating conditions of the sensor 10, this limit can be reached only after the sensor 10 has attained its own predetermined limit number (Sₘₐₓ) for regeneration. On the other hand, the counter for the regenerations of the sensor 115 is reset to zero each time the sensor 10 has undergone a number of regenerations which is equal to the previously stored limit value (Sₘₐₓ). Consequently, under normal operating conditions, the counter for the regenerations of the sensor 115 is reset to zero before reaching the predetermined limit value.

In this way, exceeding the threshold of regenerations of the sensor 115 is an indication of a fault in the sensor 10 which, evidently, is no longer able to monitor the clogging of the filters 95 and 96. Accordingly, the processor 12a controls the closing of the solenoid valves 99 and 100 and the opening of the solenoid valve 101, and supplies, by means of the indicators 37, a fault signal. In practice, the ratio between the number of regenerations of the sensor 10 and the number of regenerations of the sensor 115 is monitored; if this ratio varies beyond a predetermined limit, this is indicative of faulty operation of the sensors or filter operative at that time (split filter).

A further diagnosis of the state of the filters is provided by monitoring the pressure prevailing in the duct 80 by means of a sensor 270 disposed in the proximity of the sensor 10, which is read at the instants following the switching of the solenoid valves 99 and 100 so as to verify that the regeneration of the filter just cut in, effected at the end of the preceding operating period, has been successfully carried out.

If, at these times, the pressure exceeds a predetermined limit value, which is indicative of clogging of the filter 95 or 96, even though regeneration thereof has been attempted, the processor 12a induces the opening of the solenoid valve 101, the closing of the solenoid valves 99, 100 and the generation of a specific fault signal.

The processor 12a also effects a calculation of the rate of regeneration of the sensor 10, i.e. the number of regenerations (S) of the sensor 10 in one unit of time, so as to obtain an indication in respect of the smokiness of the engine.

The rate at which the regenerations of the sensor 10 follow one another is, in fact, directly proportional to the amount of particulate matter present in a unit volume of exhaust gas, and high values of this rate, which are indicative of malfunction of the engine, are duly signalled.

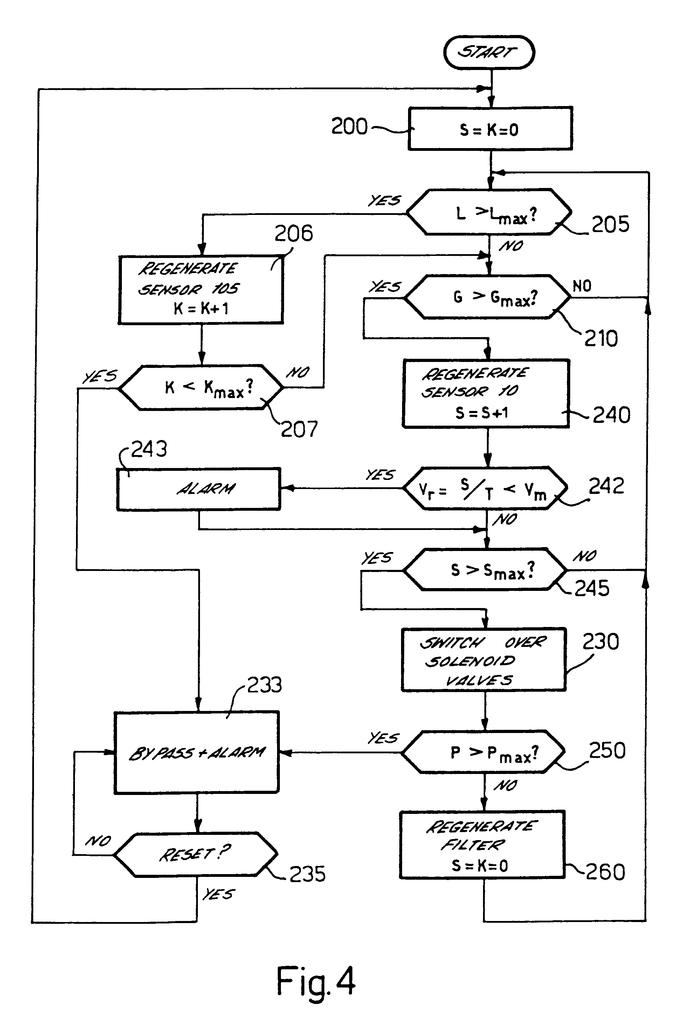

The mode of operation of the processor 12a will be described with reference to the logic block diagram in Figure 4, in which (S) and (G) indicate respectively the number of regenerations of the sensor 10 and the conductance measured at its ends, and (K) and (L) indicate respectively the number of regenerations and the conductance measured at the ends of the sensor 115.

Initially a block 200 is reached, in which (S) and (K) are set to zero, corresponding to the operation S=K=O.

The block 200 is followed by a block 205, in which it is verified whether the value (L) of the conductance measured at the ends of the sensor 115 exceeds a threshold value (Lₘₐₓ); if this condition is not verified by the block 205 the operation passes to a block 210, otherwise a block 206 follows, in which the regeneration of the sensor 115 is actuated and the variable K is increased by one unit, corresponding to the operation K = K + 1. The block 206 is followed by a block 207, in which it is verified whether the number K of regenerations of the sensor 115 is lower than a previously stored limit number (Kₘₐₓ); if this condition is verified, the operation passes to the block 210, otherwise it passes to a block 233 which actuates the closing of the solenoid valves 99 and 100 and the opening of the solenoid valve 101, so as to cut out the filters in use until that time and to convey the exhaust gases into the by-pass duct 87.

Additionally, the block 233 ensures the signalling of a malfunction condition. This condition remains until the operator presses a reset button (block 235), after which the operation returns from the block 235 to the block 200.

In the block 210 it is verified whether the value (G) of the conductance measured at the ends of the sensor 10 exceeds the threshold value (Gₘₐₓ); if this condition is not verified by the block 210 the operation returns to the block 205, otherwise the operation passes to a block 240 in which the regeneration of the sensor 10 is actuated, and the variable S is increased by one unit, corresponding to the operation S = S + 1.

The block 240 is followed by a block 242 in which the rate of regeneration Vᵣ of the sensor 10 is calculated, i.e. the number of regenerations (S) of the sensor 10 in one unit of time. If this rate Vᵣ is higher than a stored limit value Vₘ (indicative of a high level of smoke in the exhaust gases as a result of faulty operation of the engine), the operation passes from the block 242 to a block 243 in which the signalling of a malfunction is effected (for example, by the illumination of a warning light), otherwise the operation passes from the block 242 to a block 245. From the block 243 the operation passes to the block 245, in which it is verified whether the value (S), corresponding to the number of regenerations of the sensor 10, exceeds the threshold value (S_{maX}); if this condition is not verified, the operation returns from the block 245 to the block 205, otherwise the operation passes to a block 230, in which the switching over of the solenoid valves 99 and 100 is effected so as to cut out the filter previously in use and to cut in the other filter.

The block 230 is followed by a block 250, in which it is verified whether the pressure measured by the sensor 270 after the switching over of the solenoid valves exceeds a previously stored limit value; in the affirmative, the operation passes from the block 250 to the block 233 which controls the closing of the solenoid valves 99 and 100, and the opening of the solenoid valve 101, so that the filters 95 and 96 are cut off from the exhaust pipe 5a and the gases generated by the engine 7 flow directly from the engine 7 to the silencer. The signalling of a malfunction is effected in said block 233 by means of the indicators 37. In the negative, however, the block 250 is followed by a block 260, which the content of the variables S and K is set to zero; finally, from the block 260 the operation returns to the block 205.

It is evident from the foregoing how the apparatus described enables the state of contamination of the filter to be continuously monitored and makes possible the automatic switching-over of the filter, when it has reached a clogging limit value, and the subsequent regeneration thereof.

Moreover, when all the filters available are clogged or defective, during the operation of the vehicle, the apparatus cuts them off from the exhaust circuit, thereby preventing them from being permanently damaged, and provides an indication of this condition.

## Claims

1. A method for determining the clogging of a filter (3, 95, 96) disposed along a pipe (5, 5a) through which flows a gas containing particulate matter, comprising the stages of: allowing a predetermined amount of particulate matter to be deposited on a sensor, the sensor being a smoke detector (10) disposed along the pipe (5, 5a), regenerating the sensor (10) so as to bring it into an initial state in which it is substantially devoid of particulate matter: repeating said stages of allowing the particulate matter to be deposited, characterized by the stages of regenerating the sensor (10) a predetermined number of times, and generating a clogging signal when said sensor has been regenerated a predetermined number of times.

2. A method according to claim 1, characterized in that said stage of allowing a predetermined amount of particulate matter to be deposited comprises the stage of measuring the conductance present between a pair of electrodes (14) of said sensor (10), which are connected electrically by the particulate matter deposited on said sensor (10), and generating an accumulation signal when the conductivity measured attains a predetermined value; and in that said stage of regenerating said sensor (10) comprises the stage of bringing said sensor (10) to a predetermined temperature so as to burn said particulate matter deposited.

3. A method according to claim 1 or 2, characterized in that after said stage of generating a clogging signal, a stage of cutting out and regenerating said filter (95, 96) is carried out.

4. A method according to any one of the preceding claims, for a pair of filters (95, 96) disposed along two ducts (83,85) extending parallel to one another, characterized by comprising the stages of: cutting in a first filter (95, 96), determining the clogging of said first filter (95, 96), cutting out and regenerating said first filter (95, 96) when said first filter has reached a predetermined clogging level, cutting in a second filter (96, 95), determining the clogging of said second filter (96, 95), cutting out and regenerating said second filter (96, 95) when said second filter has reached a predetermined clogging level, and periodically repeating said stages.

5. A method according to any one of the preceding claims, characterised by comprising the following stages: determining the clogging of the filter by means of said sensor (10) disposed upstream of said filter (95, 96); determining the residual level of smoke in said duct by means of a second smoke detector (115) disposed downstream of said filter (95, 96); setting to zero the residual level of smoke measured by said second sensor (115) in the presence of said clogging signal; generating an alarm signal when the residual level of smoke measured by said second sensor attains a predetermined admissible maximum value.

6. A method according to claim 5, characterised in that said stage of determining the residual smokiness comprises the stages of: allowing a predetermined amount of particulate matter to be deposited on said second sensor (115); regenerating said second sensor (115) so as to bring it into a state in which it is substantially devoid of particulate matter; repeating said stages of allowing the particulate matter to be deposited and of regenerating said sensor; storing the number of regenerations; and in that said stage of generating an alarm signal comprises the stages of comparing the number of regenerations stored with an admissible maximum number of regenerations.

7. A method according to any one of claims 3 to 6, characterised in that, after said stage of cutting out and regenerating said filter, the stages are carried out of measuring the pressure upstream of said filter, generating a fault signal and bringing a by-pass path into operation when the pressure exceeds a predetermined value.

8. A method according to any one of the preceding claims, characterised by comprising the stages of: calculating the rate of regeneration(Vᵣ)of said sensor (10); comparing said rate (Vᵣ)with a stored limit value(Vₘ); generating an alarm signal when said rate of regeneration (Vᵣ)exceeds said limit value(Vₘ).

9. An apparatus for determining the clogging of a filter element (3, 95, 96) disposed in a pipe (5, 5a) in which a gas flows, comprising: at least one sensor (10) which in operation of the apparatus is exposed to said gas so as to detect the amount of particulate matter deposited on the sensor (10) itself, regenerating means (16) adapted to bring said sensor (10) periodically into an initial state in which it is substantially devoid of particulate matter; monitoring means (20, 12a) adapted to actuate said regenerating means (16) when the amount of particulate matter deposited on said sensor (10) reaches a predetermined value; characterized by the fact of comprising means for detecting clogging adapted to emit a clogged filter signal when said sensor has been regenerated a predetermined number of times.

10. An apparatus according to claim 9, characterized in that said means (25, 27, 37) for detecting clogging comprise counter means (25) cooperating with said control means (20) to count the number (S) of said regenerations; comparison means (27) adapted to compare said number (S) with a predetermined limit value (Sₘₐₓ) and means (37) for displaying said signal.

11. An apparatus according to either of claims 9 or 10, characterized in that said pipe (5, 5a) comprises an exhaust duct of an engine (7), particularly a diesel engine.

12. An apparatus according to claim 11, characterized in that said exhaust pipe (5a) comprises a branch (81) which splits into at least two paths (83,85,87) at least one of said paths conveying said exhaust gas to a filter element (95, 96); said apparatus also comprising selector means (99, 100, 101) adapted to select alternately said paths (83, 85, 87); said selector means being actuated when said apparatus (1) emits said clogged filter signal.

13. An apparatus according to claim 12, characterized in that said exhaust pipe (5a) comprises a third path, a first path (83) and a second path (85) conveying said exhaust gas respectively to a first filter and a second filter (95, 96); said selector means (99, 100, 101) being adapted to convey said exhaust gas in one of said paths (83, 85, 87) and cut off the other paths; said apparatus (1) actuating said first selector means (99, 100, 101) so as to cut in said first and second filters (95, 96) alternately when said apparatus (1) emits said clogged filter signal.

14. An apparatus according to claim 13, characterised in that said selector means (99, 100, 101) convey said gases in said third path (87) when a fault signal is emitted.

15. An apparatus according to any one of claims 9 to 14, characterised by comprising at least one auxiliary sensor (115) disposed along said duct (5a) downstream of said sensor (10) and of said filter element (95, 96), and adapted to be exposed to the gas to determine the residual level of smoke of said particulate matter deposited on said auxiliary sensor.

16. An apparatus according to claim 15, characterised by comprising regenerating means adapted to bring said auxiliary sensor (115) periodically into an initial state in which it is substantially devoid of particulate matter; control means (206) adapted to actuate said regenerator means when the amount of particulate matter deposited on said sensor (115) reaches a predetermined value; counter means (207) adapted to count the number (K) of said regenerations and to emit a fault signal when said number (K) exceeds a limit value, and resetting means adapted to set to zero the number (K) of said regenerations in the presence of said clogged filter signal.

17. An apparatus according to any one of claims 9 to 16, characterised by comprising pressure-sensing means (270) disposed along said duct (5a) upstream of said sensor (10) and of said filter element (95, 96) for sensing the pressure of said gas conveyed in said duct (5a), and means adapted to generate a fault signal (233) when the pressure sensed exceeds a predetermined threshold.

18. An apparatus according to any one of claims 9 to 17, characterised by comprising means (242) adapted to calculate the rate of regeneration (Vᵣ) of said sensor (10); means (242) adapted to compare said rate (Vᵣ) with a stored limit value (Vₘ); and means (243) adapted to generate an alarm signal if said regeneration rate (Vᵣ) exceeds said limit value (Vₘ).

## Patentansprüche

1. Verfahren zum Bestimmen der Verstopfung eines Filters (3, 95, 96), der in einem Rohr (5, 5a) angeordnet ist und über den ein Gas strömt, das einen Stoff mit Partikeln enthält, enthaltend die Schritte:
Ermöglichen, daß eine vorgegebene Menge von Stoff mit Partikeln auf einem Sensor abgeschieden wird, wobei der Sensor ein Rauchdetektor (10) ist, der entlang dem Rohr (5, 5a) angeordnet ist,
Regenerieren des Sensors (10), so daß dieser in einen anfänglichen Zustand, in dem er im wesentlichen frei von dem Stoff mit Partikeln ist, zurückversetzt wird;
Wiederholen der Stufen, in denen der Stoff mit Partikeln abgeschieden werden kann,
**gekennzeichnet** durch die folgenden Schritte,
wiederholtes Regenerieren des Sensors (10) entsprechend einer vorgegebenen Anzahl, und
Erzeugen eines Verstopfungssignals, sobald das Regenerieren des Sensors entsprechend der vorgegebenen Anzahl wiederholt wurde.

2. Verfahren nach Anspruch 1, dadurch gekennzeichnet, daß
der Schritt, gemäß dem eine vorgegebene Menge von Stoff mit Partikeln abgeschieden werden kann, den Tritt des Messens des Leitwerts zwischen einem Elektrodenpaar 14 des Sensors 10 enthält, die elektrisch durch den auf dem Sensor 10 abgeschiedenen Stoff mit Partikeln verbunden werden,
ein Häufungssignal erzeugt wird, wenn der gemessene Leitwert einen vorbestimmten Wert erreicht,
der Schritt des Regenerierens des Sensors (10) den Schritt enthält, in dem der Sensor (10) auf eine vorbestimmte Temperatur gebracht wird, so daß der abgeschiedene Stoff mit Partikeln verbrannt wird.

3. Verfahren nach Anspruch 1 oder 2, dadurch gekennzeichnet, daß nach dem Schritt des Erzeugens eines Verstopfungssignals ein Schritt des Abkoppelns und Regenerierens der Filter (95, 96) durchgeführt wird.

4. Verfahren nach einem der vorhergehenden Ansprüche für ein Filterpaar (95, 96), das entlang zweier Leitungen (83, 85), die sich parallel zueinander erstrecken, angeordnet sind, dadurch gekennzeichnet daß es die folgenden Schritte enthält:
Einkoppeln eines ersten Filters (95, 96), Bestimmen der Verstopfung des ersten Filters (95, 96), Abkoppeln und Regenerieren des ersten Filters (95, 96), wenn der erste Filter einen vorbestimmten Verstopfungswert erreicht hat,
Einkoppeln eines zweiten Filters (96, 95), Bestimmen der Verstopfung des zweiten Filters (96, 95), Abkoppeln und Regenerieren des zweiten Filters (96, 95), wenn der zweite Filter einen vorbestimmten Verstopfungspegel erreicht hat, und periodisches Wiederholen dieser Schritte.

5. Verfahren nach einem der vorhergehenden Ansprüche, dadurch gekennzeichnet, daß es die folgenden Schritte enthält:
Bestimmen der Verstopfung der Filter mit Hilfe des Sensors (10), der stromaufwärts der Filter (95, 96) angeordnet ist,
Bestimmen des Restrauchpegels in der Leitung mit Hilfe eines zweiten Rauchdetektors 115, der stromabwärts der Filter (95, 96) angeordnet ist,
Einstellen des von dem zweiten Sensor (115) gemessenen Restrauchpegels auf Null, wenn das Verstopfungssignal vorliegt,
Erzeugen eines Alarmsignals, wenn der durch den zweiten Sensor gemessene Rauchrestpegel einen vorbestimmten zulässigen Maximalwert erreicht.

6. Verfahren nach Anspruch 5, dadurch gekennzeichnet, daß der Schritt des Bestimmens des Restrauchgehalts die folgenden Schritt enthält:
Zulassen des Abscheidens einer vorbestimmten Menge von Stoff mit Partikeln auf dem zweiten Sensor (115),
Regenerieren des zweiten Sensors (115), damit dieser in einen Zustand versetzt wird, in dem er im wesentlichen frei von Stoff mit Partikeln ist,
Wiederholen der Schritte des Zulassens des Abscheidens von Stoff mit Partikeln und des Regenerierens des Sensors, Speichern der Anzahl der Regenerierungsschritte; wobei
der Schritt des Erzeugens eines Alarmsignals den Schritt des Vergleichens der Zahl der gespeicherten Regenerierungsschritte mit einer zulässigen Maximalzahl von Regenerierungsschritten enthält.

7. Verfahren nach einem der Ansprüche 3 bis 6, dadurch gekennzeichnet, daß nach dem Schritt des Abkoppelns und des Regenerierens des Filters folgende Schritte durchgeführt werden:
Messen des stromaufwärts des Filters vorliegenden Drucks,
Erzeugen eines Störsignals und Inbetriebsetzen einer Bypaß-Strecke, wenn der Druck einen vorbestimmten Wert übersteigt.

8. Verfahren nach einem der vorstehenden Ansprüche, dadurch gekennzeichnet, daß es folgende Schritte enthält:
Berechnen der Regenerierungsrate (Vᵣ) des Sensors (10),
Vergleichen der Rate (Vᵣ) mit einem gespeicherten Grenzwert (Vₘ),
Erzeugen eines Alarmsignals, sobald die Regenerierungsrate (Vᵣ) den Grenzwert (Vₘ) überschreitet.

9. Gerät zum Bestimmen des Verstopfens eines Filterelements (3, 95, 96) das in einem Rohr (5, 5a) angeordnet ist, in dem ein Gas strömt, enthaltend:
mindestens einen Sensor (10), der bei Betrieb des Geräts dem Gas ausgesetzt ist, damit er die Menge des Stoffs mit Partikeln erfaßt, die auf dem Sensor selbst abgeschieden wird,
eine Regeneriervorrichtung (16), die so ausgebildet ist, daß sie den Sensor (10) periodisch in einen Anfangszustand rückversetzt, in dem dieser im wesentlichen frei von dem Stoff mit Partikeln ist;
eine Überwachungsvorrichtung (20, 12a), die so ausgebildet ist, daß sie die Regenerierungsvorrichtung (16) aktiviert, sobald die Menge des Stoffs mit Partikeln, die auf dem Sensor abgeschieden ist, einen vorgegebenen Grenzwert erreicht;
**gekennzeichnet** durch
eine Vorrichtung zum Erfassen der Verstopfung, die so ausgebildet ist, daß sie ein Filterverstopfungssignal abgibt, wenn der Sensor entsprechend einer vorgegebenen Anzahl wiederholt regeneriert wurde.

10. Gerät nach Anspruch 9, dadurch gekennzeichnet, daß
die Vorrichtung (25, 27, 37) zum Detektieren der Verstopfung eine Zählervorrichtung (25) aufweist, die mit der Steuervorrichtung (20) wechselwirkt, damit die Anzahl (S) der Regenerierungsschritte gezählt wird; und
eine Vergleichsvorrichtung (27) vorgesehen ist, die so ausgebildet ist, daß sie die Anzahl (S) mit einem vorgegebenen Grenzwert (Sₘₐₓ) vergleicht, sowie
eine Vorrichtung (37) zum Anzeigen des Signals.

11. Gerät nach Anspruch 9 oder 10, dadurch gekennzeichnet, daß
das Rohr (5, 5a) ein Abgasrohr eines Motors, insbesondere eines Dieselmotors, enthält.

12. Gerät nach Anspruch 11, dadurch gekennzeichnet, daß
das Abgasrohr (5a) eine Verzweigung (81) aufweist, die sich in mindestens zwei Strecken (83, 85, 87) aufteilt, von denen mindestens eine das Abgas einem Filterelement (95, 96) zuführt,
das Gerät Auswahlvorrichtungen (99, 100, 101) enthält, die so ausgebildet sind, daß sie abwechselnd die Strecken (83, 85, 87) auswählen,
die Auswahlvorrichtungen aktiviert werden, wenn das Gerät (1) das Filterverstopfungssignal abgibt.

13. Gerät nach Anspruch 12, dadurch gekennzeichnet, daß
das Abgasrohr (5a) eine dritte Strecke aufweist, eine erste Strecke (83) und eine zweite Strecke (85), die jeweils das Abgas zu einem ersten Filter und einem zweiten Filter (95, 96) leiten,
die Auswahlvorrichtungen (99, 100, 101) so ausgebildet sind, daß sie das Abgas in eine der Strecken (83, 85, 87) leiten und die anderen Strecken abkoppeln,
das Gerät (1) die ersten Auswahlvorrichtungen (99, 100, 101) aktiviert, so daß die ersten und zweiten Filter (95, 96) abwechselnd angekoppelt werden, wenn das Gerät (1) das Filterverstopfungssignal abgibt.

14. Gerät nach Anspruch 13, dadurch gekennzeichnet, daß die Auswahlvorrichtungen (99, 100, 101) die Gase über die dritte Strecke (87) leiten, wenn ein Störsignal abgegeben wird.

15. Gerät nach einem der Ansprüche 9 bis 14, dadurch gekennzeichnet, daß es mindestens einen Hilfssensor (115) aufweist, der entlang der Leitung (5a) stromabwärts des Sensors (10) und der Filterelemente (95, 96) angeordnet ist, und so ausgebildet ist, daß er dem Gas ausgesetzt ist, um den Rauchpegel des Stoffs mit Partikeln zu bestimmen, der auf dem Hilfssensor abgeschieden ist.

16. Gerät nach Anspruch 15, dadurch gekennzeichnet, daß
es eine Regeneriervorrichtung enthält, die so ausgebildet ist, daß sie den Hilfssensor periodisch in einen Anfangszustand rückversetzt, in dem dieser im wesentlichen frei von dem Stoff mit Partikeln ist, sowie
eine Steuervorrichtung (206) zum Aktivieren der Regeneriervorrichtung, wenn die Menge des auf dem Sensor (115) abgeschiedenen Stoffs mit Partikeln einen vorbestimmten Wert erreicht,
eine Zählervorrichtung (207) zum Zählen der Anzahl (K) der Regenerierungsschritte und zum Abgeben eines Störsignals, wenn die Anzahl (K) einen Grenzwert übersteigt, und
eine Rücksetzvorrichtung zum Nullsetzen der Anzahl (K) von Regenerierungsschritten, bei Vorliegen des Filterverstopfungssignals.

17. Gerät nach einem der Ansprüche 9 bis 16, dadurch gekennzeichnet, daß
es eine Druckmeßvorichtung (270) enthält, die entlang des Rohrs (5a) stromaufwärts von dem Sensor (10) und den Filterelementen (95, 96) zum Messen des Drucks von dem in dem Rohr (5a) strömenden Gas vorgesehen ist, sowie
eine Vorrichtung zum Erzeugen eines Störsignals (233), wenn der Druck einen vorgegebenen Schwellwert übersteigt.

18. Gerät nach einem der Ansprüche 9 bis 17, dadurch gekennzeichnet, daß
es eine Vorrichtung (242) zum Berechnen der Regenerierungsrate (Vᵣ) des Sensors (10) enthält, sowie
eine Vorrichtung zum Vergleichen der Rate (Vᵣ) mit einem gespeicherten Grenzwert (Vₘ) und
eine Vorrichtung (243) zum Erzeugen eines Alarmsignals, wenn die Regenerierungsrate (Vᵣ) den Grenzwert (Vₘ) übersteigt.

## Revendications

1. Un procédé de détermination du colmatage d'un filtre (3, 95, 96) disposé le long d'une conduite (5, 5a) au travers de laquelle circule un gaz contenant des particules de matières, comprenant les étapes : de dépôt d'une quantité prédéterminée de particules de matières sur un capteur, le capteur étant un détecteur de fumée (10) disposé le long de la conduite (5, 5a), de régénération du capteur (10) de manière à l'amener à son état initial dans lequel il est sensiblement exempt de particules de matières, de répétition desdites étapes pour permettre aux particules de matières de se déposer, caractérisé par les étapes de régénération du capteur (10) un nombre prédéterminé de fois, et d'émission d'un signal de colmatage lorsque ledit capteur a été régénéré un nombre prédéterminé de fois.

2. Un procédé selon la revendication 1, caractérisé en ce que ladite étape permettant à une quantité pré-déterminée de particules de matières de se déposer comprend l'étape de mesure de la conductibilité existant entre une paire d'électrodes (14) dudit capteur (10) qui sont reliées électriquement par les particules de matières déposées sur ledit capteur (10), et l'émission d'un signal d'accumulation lorsque ladite conductibilité mesurée atteint une valeur prédéterminée, et en ce que ladite étape de régénération dudit capteur (10) comprend l'étape amenant ledit capteur (10) à une température prédéterminée de manière à brûler lesdites particules de matières déposées.

3. Un procédé selon la revendication 1 ou 2, caractérisé en ce qu'après ladite étape d'émission d'un signal de colmatage, il est exécuté une étape de mise hors circuit et de régénération dudit filtre (95, 96).

4. Un procédé selon l'une quelconque des revendications précédentes, pour une paire de filtres (95, 96) disposés le long de deux conduites (83, 85) s'étendant parallèlement, l'une par rapport à l'autre, caractérisé en ce qu'il comprend les étapes: de mise en circuit d'un premier filtre (95, 96), de détermination du colmatage dudit premier filtre (95, 96), de mise hors circuit et de régénération dudit premier filtre (95, 96) lorsque ledit premier filtre a atteint un niveau de colmatage prédéterminé, de mise en circuit d'un second filtre (96, 95), de détermination du colmatage dudit second filtre (96, 95), de mise hors circuit et de régénération dudit second filtre (96, 95) lorsque ledit second filtre a atteint un niveau de colmatage prédéterminé, et de répétition périodique desdites étapes.

5. Un procédé selon l'une quelconque des revendications précédentes, caractérisé en ce qu'il comprend les étapes suivantes: détermination du colmatage du filtre au moyen dudit capteur (10) disposé en amont dudit filtre (95, 96); détermination du niveau de fumée résiduel dans ladite conduite au moyen d'un second détecteur de fumée (115) disposé en aval dudit filtre (95, 96); mise à zéro du niveau de fumée résiduel mesuré par ledit second capteur (115) en présence dudit signal de colmatage; émission d'un signal d'alarme lorsque le niveau de fumée résiduel mesuré par ledit second capteur atteint une valeur maximale admissible prédéterminée.

6. Un procédé selon la revendication 5, caractérisé en ce que ladite étape de détermination de la fumée résiduelle comprend les étapes de : dépôt d'une quantité prédéterminée de particules de matières sur ledit second capteur (115); régénération dudit second capteur (115) de manière à l'amener dans un état dans lequel il est sensiblement exempt de particules de matières; répétition desdites étapes pour permettre aux particules de matières de se déposer et pour régénérer ledit capteur; stockage du nombre de régénérations; et en ce que ladite étape d'émission d'un signal d'alarme comprend les étapes de comparaison du nombre de régénérations stockées à un nombre maximal admissible de régénérations.

7. Un procédé selon l'une quelconque des revendications 3 à 6, caractérisé en ce qu'après ladite étape de mise hors circuit et de régénération dudit filtre, il est exécuté les étapes de mesure de pression en amont dudit filtre, d'émission d'un signal de dérangement et la mise en circuit d'un trajet de dérivation lorsque la pression dépasse une valeur prédéterminée.

8. Un procédé selon l'une quelconque des revendications précédentes, caractérisé en ce qu'il comprend les étapes de: calcul du taux de régénération (Vᵣ) dudit capteur (10), de comparaison dudit taux (Vᵣ) à une valeur limite stockée (Vₘ), d'émission d'un signal d'alarme lorsque ledit taux de régénération (Vᵣ) dépasse ladite valeur limite (Vₘ).

9. Un appareil de détermination du colmatage d'un élément de filtre (3, 95, 96) disposé dans une conduite (5, 5a), dans laquelle circule un gaz, comprenant: au moins un capteur (10) qui, lorsque l'appareil est en service, est exposé audit gaz de manière à détecter la quantité de particules de matières déposées sur ledit capteur (10), des moyens de régénération (16) adaptés pour amener ledit capteur (10) périodiquement dans un état initial dans lequel il est sensiblement exempt de particules de matières; des moyens de contrôle (20, 12a) adaptés pour actionner lesdits moyens de régénération (16) lorsque la quantité de particules de matières déposée sur ledit capteur (10) atteint une valeur prédéterminée; caractérisé en ce qu'il comprend des moyens de détection de colmatage agencés pour émettre un signal de colmatage de filtre lorsque ledit capteur a été régénéré un nombre prédéterminé de fois.

10. Un appareil selon la revendication 9, caractérisé en ce que lesdits moyens (25, 27, 37) de détection de colmatage comprennent des moyens de comptage (25) solidaires desdits moyens de commande (20) pour compter le nombre (S) desdites régénérations; des moyens de comparaison (27) adaptés pour comparer ledit nombre (S) à une valeur limite prédéterminée (Sₘₐₓ) et des moyens (37) d'affichage dudit signal.

11. Un appareil selon l'une des revendications 9 ou 10, caractérisé en ce que ladite conduite (5, 5a) comprend un tuyau d'échappement d'un moteur (7), en particulier d'un moteur diésel.

12. Un appareil selon la revendication 11, caractérisé en ce que ladite conduite d'échappement (5a) comprend une dérivation (81) qui se divise en, au moins, deux trajets (83, 85, 87), au moins l'un desdits trajets acheminant ledit gaz d'échappement vers un élément de filtre (95, 96); ledit appareil comprenant également des moyens de sélection (99, 100, 101) adaptés pour sélectionner alternativement lesdits trajets (83, 85, 87); lesdits moyens de sélection étant actionnés lorsque ledit appareil (1) émet ledit signal de colmatage de filtre.

13. Un appareil selon la revendication 12, caractérisé en ce que ladite conduite d'échappement (5a) comprend un troisième trajet, un premier trajet (83) et un second trajet (85) acheminant ledit gaz d'échappement, respectivement, vers un premier filtre et un second filtre (95, 96), lesdits moyens de sélection (99, 100, 101) étant agencés pour acheminer ledit gaz d'échappement dans l'un desdits trajets (83, 85, 87) et intercepter les autres trajets; ledit appareil (1) actionnant lesdits premiers moyens de sélection (99, 100, 101) de manière à mettre en circuit, alternativement, lesdits premier et second filtres (95, 96) lorsque ledit appareil (1) émet ledit signal de colmatage de filtre.

14. Un appareil selon la revendication 13, caractérisé en ce que lesdits moyens de sélection (99, 100, 101) acheminent lesdits gaz dans ledit troisième trajet (87) lorsqu'un signal de dérangement est émis.

15. Un appareil selon l'une quelconque des revendications 9 à 14, caractérisé en ce qu'il comprend au moins un capteur auxiliaire (115) disposé le long de ladite conduite (5a) en aval dudit capteur (10) et dudit élément de filtre (95, 96), et adapté pour être exposé au gaz pour déterminer le niveau résiduel de fumée desdites particules de matières déposées sur ledit capteur auxiliaire.

16. Un appareil selon la revendication 15, caractérisé en ce qu'il comprend des moyens de régénération adaptés pour amener périodiquement ledit capteur auxiliaire (115) à un état initial dans lequel il est essentiellement exempt de particules de matières; des moyens de commande (206) adaptés pour actionner lesdits moyens de régénération lorsque la quantité de particules de matières déposée sur ledit capteur (115) atteint une valeur prédéterminée; des moyens de comptage (207) adaptés pour compter le nombre (K) desdites régénérations et pour émettre un signal de dérangement lorsque ledit nombre (K) dépasse une valeur limite; et des moyens de réinitialisation adaptés pour remettre à zéro le nombre (K) desdites régénérations en présence dudit signal de colmatage de filtre.

17. Un appareil selon l'une quelconque des revendications 9 à 16, caractérisé en ce qu'il comprend des moyens de détection de pression (270) disposés le long de ladite conduite (5a) en amont dudit capteur (10) et dudit élément de filtre (95, 96) pour détecter la pression dudit gaz acheminé dans ladite conduite (5a), et des moyens adaptés pour émettre un signal de dérangement (233) lorsque la pression détectée dépasse un seuil prédéterminé.

18. Un appareil selon l'une quelconque des revendications 9 à 17, caractérisé en ce qu'il comprend des moyens (242) adaptés pour calculer le taux de régénération (Vᵣ) dudit capteur (10); des moyens (242) adaptés pour comparer ledit taux (Vᵣ) à une valeur limite stockée (Vₘ); et des moyens (243) adaptés pour émettre un signal d'alarme si ledit taux de régénération (Vᵣ) dépasse ladite valeur limite (Vₘ).
